(19) Europäisches Patentamt
European Patent Office
Office européen des brevets

(11) **EP 1 457 400 B1**

(12) **FASCICULE DE BREVET EUROPEEN**

(45) Date de publication et mention
de la délivrance du brevet:
**26.01.2011 Bulletin 2011/04**

(51) Int Cl.:
***B60T 13/14*** *(2006.01)*

(21) Numéro de dépôt: **03005689.9**

(22) Date de dépôt: **13.03.2003**

(54) **Dispostif hydraulique de freinage à sensibilité de freinage améliorée**

Bremskraftvorrichtung mit verbesserter Bremsempfindlichkeit

Hydraulic brake device with improved braking sensitivity

(84) Etats contractants désignés:
**AT BE BG CH CY CZ DE DK EE ES FI FR GB GR HU IE IT LI LU MC NL PT RO SE SI SK TR**

(43) Date de publication de la demande:
**15.09.2004 Bulletin 2004/38**

(73) Titulaire: **VHIT S.p.A.**
**26013 Crema (IT)**

(72) Inventeur: **Cadeddu, Leonardo**
**26013 Crema (IT)**

(74) Mandataire: **Gruber, Peter**
**Robert Bosch GmbH**
**Patentabteilung**
**Postfach 30 02 20**
**70442 Stuttgart (DE)**

(56) Documents cités:
**US-A- 2 957 311     US-A- 4 337 686**
**US-A- 4 741 161**

**Description**

La présente invention se rapporte principalement à un dispositif hydraulique de freinage à sensibilité améliorée pour véhicule automoteur en particulier pour des véhicules agricoles par exemple des tracteurs.

Il est connu des dispositifs hydrauliques de freinage comportant un maître-cylindre muni d'au moins un piston commandé par une tige d'actionnement reliée à une pédale de frein, l'action sur la pédale de frein étant assistée par un servomoteur hydraulique d'assistance au freinage dit « à centre fermé » muni d'un piston hydraulique fournissant l'assistance, le dispositif de freinage comporte également un accumulateur de fluide à haute pression. Au repos la communication entre le servomoteur hydraulique d'assistance au freinage « centre fermé » de type connu et l'accumulateur est interrompue en amont du piston hydraulique du servomoteur et le servomoteur est rempli de fluide hydraulique à basse pression. Lors du freinage, la communication entre le servomoteur et l'accumulateur s'ouvre et le fluide hydraulique sous haute pression contenu dans l'accumulateur s'écoule dans le servomoteur d'assistance au freinage provoquant le déplacement en direction du maître-cylindre du piston hydraulique d'assistance, et fournissant une assistance hydraulique au freinage. L'accumulateur de pression est alimenté par exemple par une pompe hydraulique.

Ce type de servomoteur « à centre fermé » a pour inconvénient de ne pas permettre une maîtrise fine du niveau de freinage souhaité du fait de l'écoulement du liquide sous pression dans le servomoteur, ce qui est ressenti par le conducteur comme un freinage brutal.

De plus ce type connu de servomoteur à centre fermé offre un sensation à la pédale de frein très désagréable, qui est susceptible provoquer un désagrément certain chez le conducteur du véhicule.

Le document US 4 741 161 A montre un dispositif d'après le préambule de la revendication 1.

C'est par conséquent un but de la présente invention d'offrir un dispositif hydraulique de freinage permettant un meilleur contrôle du niveau de freinage.

C'est également un but de la présente invention d'offrir un dispositif hydraulique de freinage dont la réaction transmise à la pédale de frein provoque une sensation pédale agréable pour le conducteur.

Ce but est atteint par un dispositif hydraulique de freinage comportant un maître-cylindre et un servomoteur hydraulique d'assistance au freinage « à centre fermé », la communication entre le servomoteur hydraulique d'assistance au freinage et la source de fluide hydraulique à haute pression étant fermé en aval du piston hydraulique d'assistance.

En d'autre termes, il s'agit d'un dispositif hydraulique de freinage comportant un maître-cylindre et un servomoteur hydraulique d'assistance au freinage comportant un corps dans lequel est monté à coulissement étanche un piston hydraulique d'assistance, ledit piston d'assistance séparant une première et une seconde chambres; au repos lesdites chambres étant en communication et remplies d'un fluide hydraulique sous haute pression, et lors d'une phase de freinage, la communication entre les deux chambres est interrompue, et la communication entre la seconde chambre et le maître-cylindre est ouverte, provoquant le déplacement du piston d'assistance.

Le dispositif hydraulique selon la présente invention a pour avantage de permettre en début de freinage une annulation des jeux fonctionnels du circuit de freinage, par exemple au niveau des freins des roues du véhicule. Cette annulation des jeux fonctionnels se fait de manière invisible pour le conducteur, supprimant ainsi l'impression de retard au freinage.

L'invention a principalement pour objet un dispositif de freinage hydraulique comportant un maître-cylindre et un servomoteur d'assistance hydraulique au freinage du type à centre fermé d'après la revendication 1.

L'invention a aussi pour objet un dispositif de freinage caractérisé en ce que le piston comporte une jupe montée fixe sur une tige entraînée par la tige d'actionnement.

L'invention a aussi pour objet un dispositif de freinage caractérisé en ce que la communication entre la chambre du servomoteur hydraulique et la chambre du maître-cylindre s'effectue par l'intermédiaire des canaux et d'un système de clapets.

L'invention a aussi pour objet un dispositif de freinage caractérisé en ce que le système de clapets comporte un premier clapet muni d'un obturateur coopérant avec un siège de clapet actionné par un poussoir lors du déplacement du piston de commande dans la tige du piston hydraulique d'assistance et un second clapet muni d'un obturateur coopérant avec un siège actionné par une différence de pression hydraulique entre la chambre du servomoteur hydraulique et la chambre du maître-cylindre.

L'invention a aussi pour objet un dispositif de freinage caractérisé en ce que la tige du piston d'assistance hydraulique comporte une première partie de plus grand diamètre extérieur orientée vers la pédale de frein et une seconde partie de plus petit diamètre extérieur relatif axialement opposée à la première partie.

L'invention a aussi pour objet un dispositif de freinage caractérisé en ce qu'il comporte une chambre d'échappement susceptible d'être mise en communication avec la chambre avant du servomoteur hydraulique par des premiers moyens de communication et avec la chambre du maître-cylindre par des seconds moyens de communication.

L'invention a aussi pour objet un systèmes de freinage caractérisé en ce qu'il comporte deux dispositifs de freinage selon l'une des revendications précédentes reliés par un dispositif d'équilibrage de pression.

La présente invention sera mieux comprise à l'aide de la description qui suit et des dessins annexés sur lesquels l'avant et l'arrière correspondent respectivement à la gauche et la droite des dessins et pour lesquels :

- la figure 1 est une vue en coupe longitudinale d'un dispositif hydraulique de freinage selon la présente invention en position repos ;

- la figure 2 est une vue en coupe du dispositif hydraulique de freinage de la figure 1 dans une première position de freinage ;

- la figure 3 est une vue en coupe longitudinale du dispositif hydraulique de freinage de la figure 1 dans une deuxième position de freinage.

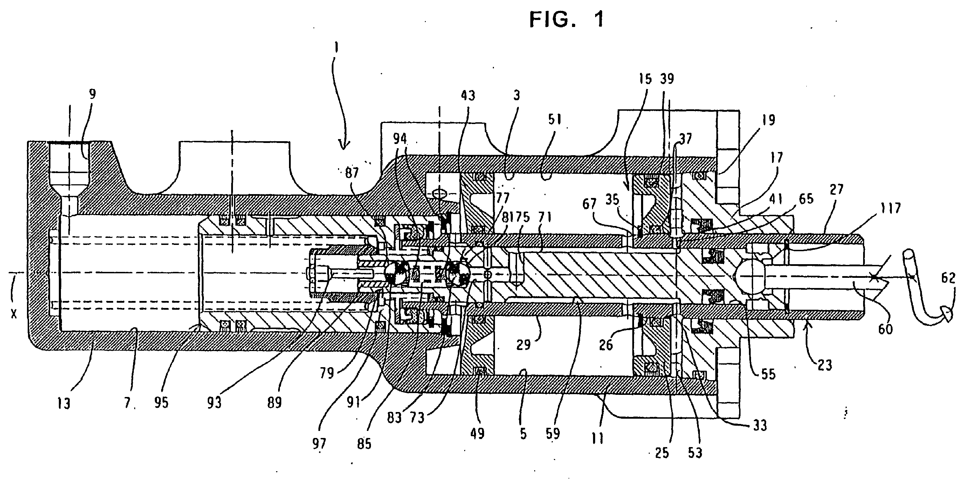

Sur la figure 1, on peut voir un dispositif de freinage hydraulique selon la présente invention comportant un corps 1 de forme générale de révolution et d'axe X. Le corps 1 est percé d'un alésage 3 formé à l'arrière par une première chambre de plus grand diamètre 5 et à l'avant par une seconde chambre de plus petit diamètre 7. La première chambre 5 forme un servomoteur hydraulique de freinage, la seconde chambre 7 forme un maître-cylindre 13, la chambre 7 étant reliée à au moins un frein disposé au niveau de roues par un canal 9 pratiqué perpendiculairement à l'axe X dans le corps 1. Le servomoteur hydraulique 11 comporte un piston hydraulique 15 d'assistance monté à coulissement étanche dans la chambre 5, le piston 15 étant guidé en translation selon l'axe X par une bague 17 obturant une première extrémité longitudinale arrière 19 de la chambre 5. Le piston d'assistance hydraulique 15 comporte une tige 23 sur laquelle est montée de manière fixe une jupe 25, la tige 23 formée d'un tube comportant à une première extrémité longitudinale orientée vers l'arrière une première partie de plus grand diamètre 27 et à une seconde extrémité longitudinale orientée vers l'avant une seconde partie de plus petit diamètre 29, la première partie de plus grand diamètre 27 étant reliée à la seconde partie 29 de plus petit diamètre par une section conique 26 de conicité orientée vers l'avant, susceptible de coopérer avec un orifice 33 de section longitudinale conique pratiquée dans la partie centrale de la jupe 25. Par conséquent, la jupe 25 est rendue solidaire de la tige 23 vers l'arrière par coopération de la section conique 26 et du passage et vers l'avant par un circlips 35. L'étanchéité entre la tige et la jupe est réalisée au moyen d'un joint par exemple un joint torique 37, l'étanchéité entre la jupe 25 et la périphérie intérieure de la chambre 7 est réalisée au moyen d'un joint par exemple un joint torique 39 et l'étanchéité entre la tige et la bague 17 est réalisée par exemple au moyen de joints, par exemple des joints à lèvres 41. L'extrémité longitudinale avant de la tige 23 pénètre de manière étanche dans la chambre 7 du maître-cylindre, l'étanchéité entre la chambre 7 et la chambre 5 étant réalisée par une bague 43 comportant un passage 45 dans lequel coulisse de manière étanche la tige 23, l'étanchéité étant réalisée par des joints par exemple un joint torique, la bague 43 étant montée de manière fixe par exemple à force dans la chambre 5 de manière étanche par un joint par exemple un joint torique 49.

La jupe 25 divise la chambre 5 en une première chambre arrière 53 et une deuxième chambre avant 51. La tige 23 définit un alésage 55 dans lequel est monté à coulissement étanche un piston de commande 59 muni à une première extrémité orientée vers l'arrière d'une tige d'actionnement 60 reliée à un moyen d'actionnement, par exemple une pédale de frein 62. La chambre avant 51 et la chambre arrière 53 sont au repos mis en communication par l'intermédiaire de l'alésage 55 et de canaux 65,67 pratiqués dans la tige 23 perpendiculairement à l'axe X.

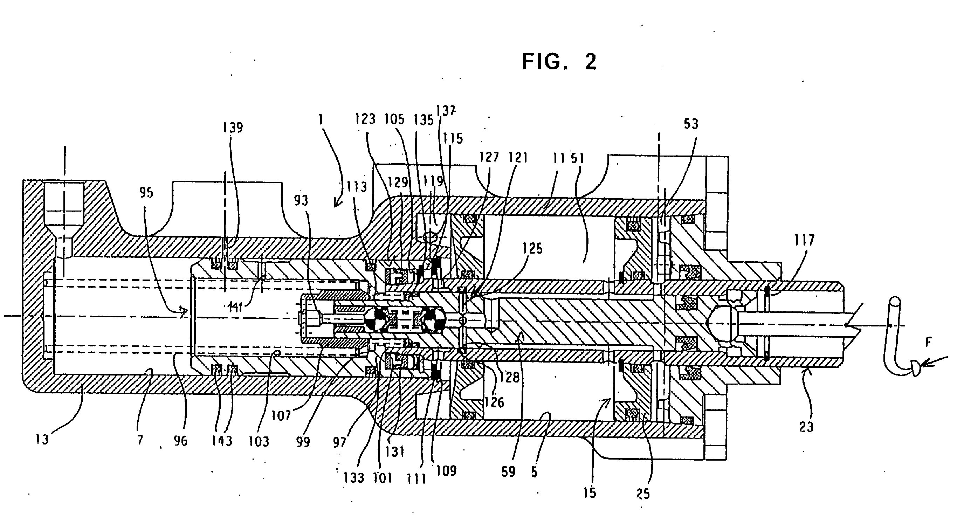

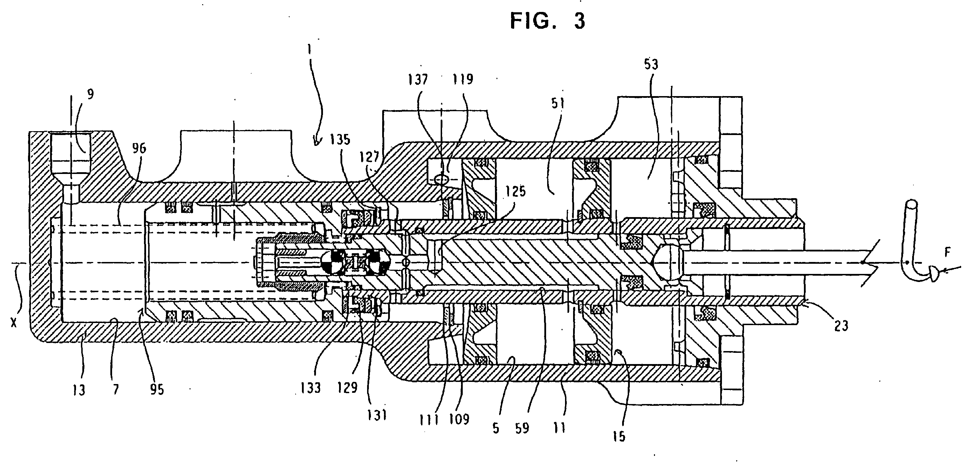

Le piston de commande 59 comporte des moyens de communication 69 entre la chambre avant 51 et la chambre 7 du maître-cylindre, les moyens de communication 69 sont formés de canaux 71 pratiqués sur la périphérie extérieure du piston de commande 59 parallèles à l'axe X, d'un alésage 73 pratiqué dans la partie avant longitudinale du piston de commande 59 et reliée au canal 71 par un passage transversale 75. L'alésage 73 pratiqué dans la partie avant du piston de commande 59 comporte un premier clapet 77 et un second clapet 79, dans l'exemple non limitatif représenté sur les figures 1, 2 et 3, le premier clapet 77 est à actionnement hydraulique, le second clapet 79 étant à actionnement mécanique.

Le premier clapet 77 comporte un siège de clapet 81 formé, par exemple, par un épaulement pratiqué dans la périphérie intérieure de l'alésage 73 et un obturateur formé par exemple par une bille 83, la bille 83 étant appliquée sur le siège du clapet 81 par un ressort 85. Le second clapet 79 est formé par un siège de clapet 87 formé par une première extrémité longitudinale d'un manchon 89 monté à force dans la partie avant de l'alésage 73 et un obturateur par exemple d'une bille 91 appliquée sur le siège du clapet 87 par le ressort 85. L'ouverture du clapet 79 s'effectue au moyen d'une tige 93 montée fixe par rapport à un piston hydraulique 95 du maître-cylindre 13. Le ressort 85 est monté en compression entre la première bille 83 et la seconde bille 91 par l'intermédiaire d'un premier et d'un second moyen d'appui 94. Le maître-cylindre 13 comporte un piston hydraulique 95 monté à coulissement étanche dans la chambre 7 du maître par exemple au moyen de joints toriques disposés dans des gorges pratiquées dans la périphérie extérieure du piston 95. Le piston 95 a une forme sensiblement de douille dont la périphérie intérieure comporte une saillie annulaire 97 dans lequel coulisse l'extrémité avant du piston de commande 59. La saillie annulaire 97 forme un épaulement avant 99 et un épaulement arrière 101 divisant l'intérieur de la douille en une partie avant de plus petit diamètre intérieur 103 et en une partie arrière de plus grand diamètre 105.

La tige 93 permettant l'ouverture mécanique du second clapet 79 disposé dans le piston de commande 59 est portée par un manchon 107 dont l'extrémité arrière forme une embase pincée entre l'épaulement 99 et un ressort 96 monté en compression dans la chambre 7. Le ressort 96 est un ressort de rappel en position repos du piston hydraulique 95, la position repos longitudinale du piston 95 étant définie par une butée 109 par exemple un circlip monté dans une gorge pratiquée dans la périphérique interne de la chambre 7, un joint par exemple un joint plat 111 est monté en appui entre le circlip 109 et l'extrémité longitudinale arrière du piston 95. Le ressort de rappel 113 en position repos du piston de commande 59 est monté entre une extrémité longitudinale arrière du manchon 107 et un épaulement 115 pratiqué sur la périphérie extérieure du piston de commande 59, la position de repos du piston de commande étant définie par une butée 117, par exemple un circlip monté dans une gorge pratiquée dans la périphérie interne de la partie arrière de l'alésage 55 de la tige 23.

La chambre 5 comporte une chambre d'échappement 119 délimitée par la seconde bague de guidage 43 et par une partie du corps 1 faisant saillie dans la chambre 5 et formant une extrémité longitudinale arrière de la chambre 7. La chambre d'échappement 119 est susceptible d'être mise en communication avec la chambre avant 51 et la chambre 7 du maître-cylindre respectivement par l'intermédiaire de premiers 121 et seconds 123 moyens de communication. Le premier moyen de communication 121 comporte un premier canal d'échappement 125 pratiqué dans le piston de commande 59 perpendiculairement à l'axe X et débouchant dans l'alésage 73 et dans la surface extérieure du piston de commande 59, et comporte également des seconds canaux d'échappement 127 pratiqués dans la tige 23 du piston d'assistance 15 perpendiculairement à l'axe X et débouchant dans la chambre d'échappement et dans l'alésage 55. La communication entre les premiers canaux d'échappement 125 et les seconds canaux d'échappement 127 est susceptible d'être interrompue par un joint 126, par exemple un joint torique monté fixe dans une gorge 128 pratiquée dans la surface interne de la tige 23.

Les seconds moyens 123 susceptibles de mettre en communication la chambre 7 du maître-cylindre et la chambre d'échappement 119, comportent un joint à lèvres 129 monté dans la partie arrière de plus grand diamètre 105 du piston hydraulique 95 du maître-cylindre, susceptible d'intercepter une portion arrière 131 de plus grand diamètre de l'extrémité longitudinale avant de la tige 23 relativement à une portion avant de plus petit diamètre 133, la portion de plus petit diamètre 133 s'étend sur une longueur L. Le joint à lèvres 129 est maintenu par un empilement de bagues 135 et par une butée, par exemple un circlip monté dans une gorge pratiquée dans la périphérie interne de la partie arrière de plus grand diamètre 105 du piston hydraulique 95. La chambre d'échappement 119 comporte un orifice d'échappement 137 permettant au liquide de frein d'être renvoyé vers un réservoir de liquide de frein (non représenté).

Ce premier dispositif est avantageusement associé à un deuxième dispositif de même nature équipant respectivement un premier et un second axe de roues pour cela un dispositif de balancement de pression est prévu afin d'équilibrer les pressions entre le premier dispositif et le second dispositif. Un canal 139 de communication pratiqué dans la paroi de la chambre 7 du' maître-cylindre perpendiculairement à l'axe X et un second canal 141 de communication pratiqué dans le piston hydraulique 95 dans la partie du plus petit diamètre 10 assure la communication entre le premier et le second dispositif et le dispositif de balancement, le canal 139 est isolé de la chambre 7, et donc du liquide de frein par deux joints, des joints toriques 143 montés dans des gorges pratiquées dans la périphérie extérieure du piston 95. Lors du freinage la chambre 7 est mise en communication avec le canal 139 par l'intermédiaire du canal 141, les joints 143 ayant dépassé la position axiale du canal 139 par avancée du piston 95, n'assurent plus l'étanchéité entre le canal 139 et la chambre 7.

Les premier et second dispositifs sont actionnés respectivement chacun par un moyen d'actionnement, par exemple une pédale 62 reliée à la tige d'actionnement, les pédales étant susceptibles d'être actionnées simultanément par des moyens de liaison amovibles. Lorsqu'un tracteur équipé des dispositifs actionnables respectivement par les pédales 62 circule sur une route et non sur un terrain agricole, par exemple un champ, les pédales 62 sont reliées l'une à l'autre et actionnables ensemble afin de freiner les deux axes de roues du tracteur. Lors d'un déplacement dans un champ, les pédales 62 sont actionnables indépendamment afin d'assister les déplacements en courbe du tracteur par une action de freinage susceptible d'être différente sur les deux axes.

Le dispositif comporte également une source (non représentée) de fluide hydraulique sous haute pression sensiblement comprise entre 15 et 30 bars et de manière avantageuse entre 18 et 20 bars, alimentant le servomoteur hydraulique d'assistance au freinage. La source, comportant par exemple un accumulateur de pression alimenté par un pompe hydraulique, est en communication permanente avec la chambre arrière 53 du servomoteur. Par conséquent en phase de repos, la chambre arrière 53 et la chambre avant 51 sont remplies de fluide hydraulique sous la même pression provenant de la source de fluide sous haute pression.

Nous allons maintenant décrire le fonctionnement du dispositif hydraulique de freinage selon la présente invention.

Au repos, tel qu'illustré sur la figure 1, le piston de commande 59 est en appui sur la butée 117. La position relative du piston de commande 59 et de la tige 23 ou plus particulièrement celle du le canal transversal 65 de la chambre arrière 53 et la position du canal longitudinal 71 du piston de commande 59, permet la communication entre la chambre arrière 53 et la chambre avant 51 par l'intermédiaire du canal 65 du canal 67 et du canal 71. La communication entre la chambre avant 51 du servomoteur hydraulique 11 et la chambre 7 du maître-cylindre 13 est interrompue par le système de clapet 77,79 disposé dans la partie avant de l'extrémité longitudinale du piston de commande 59.

La communication entre la chambre avant 51 du servomoteur hydraulique 11 et la chambre d'échappement 119 est interrompue par le joint torique 126 monté dans la gorge 128 pratiquée dans la périphérie intérieure de la tige 23, le joint torique 141 étant disposé entre le premier canal d'échappement 125 pratiqué dans le corps du piston de commande 59 et le second canal d'échappement 127 pratiqué dans le corps de la tige 23.

La communication par les moyens 123 entre la chambre 7 et la chambre d'échappement 119 est ouverte, le joint à lèvres 129 n'interceptant pas au repos la portion arrière de plus grand diamètre 131.

Lors d'une action de freinage du conducteur, celui-ci appuie sur la pédale de frein qui déplace la tige d'actionnement 60, déplaçant axialement vers l'avant le piston de commande 59. Le déplacement relatif du piston de commande 59 par rapport à la tige 23 interrompt la communication entre la chambre arrière 53 et la chambre avant 51 du servomoteur hydraulique. En effet, la portion du piston hydraulique 59 disposée à l'arrière des canaux 71 intercepte le canal 65 lors du déplacement vers l'avant du piston de commande 59. Le déplacement axial du piston 59 par rapport au piston hydraulique 95 du maître-cylindre 13 provoque l'ouverture du second clapet 79 par appui de la tige 93 solidaire du manchon 107 monté fixe par rapport au piston hydraulique 95 sur la bille du second siège de clapet 79, la bille 83 se soulevant du siège de clapet 87 à l'encontre du ressort 85.

La différence de pression entre la chambre avant 51 du servomoteur hydraulique 11 et la chambre 7 du maître-cylindre provoque l'ouverture du premier clapet 77, la bille 83 du premier siège de clapet 77 se soulevant par rapport au siège de clapet 81 à l'encontre du ressort 85. Par conséquent, le liquide hydraulique contenu dans la chambre avant 51 sous haute pression relativement au liquide hydraulique contenu dans la chambre 7 s'écoule par les moyens de communication 69 dans la chambre 7, plus particulièrement, le liquide s'écoule de la chambre 51 à la chambre 7 par le canal 67, par le canal 71, par l'alésage transversal 75, et par l'alésage 73 pratiqué dans la partie avant de l'extrémité longitudinale avant du piston de commande 59 par l'intermédiaire du premier et second clapets 77,79 ouverts.

Il y a alors une diminution de pression dans la chambre 51 avant du servomoteur hydraulique, et par conséquent il y a un déplacement axial vers l'avant du piston hydraulique d'assistance 15 du fait de la différence de pression entre la chambre arrière 53 et la chambre avant 51.

Jusqu'à cet instant, le liquide de frein s'écoule dans la chambre d'échappement 119 par les moyens de communication 123, empêchant l'apparition de pression dans la chambre 7. Cependant la pression du liquide contenu dans la chambre 7 et dans le circuit de freinage est suffisante pour permettre le rattrapage des jeux fonctionnels du circuit de freinage.

Ensuite, l'avancée du piston d'assistance 15 provoque la fermeture des seconds moyens de communication 123, par avancée de la tige 23 du piston d'assistance 15 par rapport au joint à lèvres 129 monté fixe dans le piston hydraulique du maître-cylindre 95. Après un déplacement axial vers l'avant du piston d'assistance 15, et par conséquent de la tige 23, le joint à lèvres 129 intercepte la portion arrière de plus grand diamètre 131 interrompant de manière étanche la communication entre la chambre 7 du maître-cylindre et la chambre d'échappement 11 et permettant une augmentation de pression dans la chambre 7 du maître-cylindre 15 et l'apparition d'une réaction du maître-cylindre sur le piston de commande 59 par application d'une pression de liquide de frein sur l'extrémité transversale avant du piston de commande 59, cette réaction s'ajoutant à la réaction du ressort 116.

Il y a alors un déplacement relatif entre la tige 23 du piston hydraulique d'assistance 15 et le piston de commande 59, plus particulièrement le piston hydraulique 15 à une position plus avancée par rapport au piston de commande 59, et la réouverture de la communication entre la chambre arrière 53 et la chambre avant 51 du servomoteur hydraulique et par conséquent une réalimentation en liquide de frein à haute pression de la chambre avant 51.

Ensuite, la pression dans la chambre 7 du maître-cylindre s'ajoutant à la réaction du ressort 85 ferme le premier clapet 77 par application de la bille 83 sur le siège 81.

Le mouvement relatif entre le piston d'assistance 15 et le piston de commande 59 provoque l'ouverture des premiers moyens de communication 121, par mise en communication entre le premier canal d'échappement 125 du piston de commande 59 et le second canal d'échappement 127 de la tige 23. Le liquide hydraulique à haute pression contenu dans la chambre 51 du servomoteur hydraulique s'écoule alors par les premiers moyens de communication 121 dans la chambre d'échappement 119. Ceci provoque une différence de pression entre la chambre arrière 53 et la chambre avant 51 du servomoteur hydraulique et par conséquent une avancée du piston d'assistance 15. Le déplacement axial vers l'avant du piston d'assistance 15 provoque par appui de l'extrémité longitudinale avant de la tige 23 sur l'épaulement arrière 101 porté par la saillie annulaire 97 du piston hydraulique 95, le déplacement axial vers l'avant du piston hydraulique 95, et une augmentation de pression dans la chambre 7, e dans le circuit de freinage permettant le freinage. La pression dans la chambre 7 du maître-cylindre 13 est proportionnelle à la force appliquée sur la pédale de frein par le conducteur suivant la formule (I) suivante :

$$F - F_2 - F_3 = (P_3 * A_7) + F_1 - [P_{53} * (A_{51} - A_{27})] + [P_{51} * (A_{51} - A_{29})] \qquad (I)$$

F étant la force appliquée par la pédale, $F_2$ étant la charge du ressort 116, $F_3$ étant la réaction du ressort 85, $P_3$ étant la pression résidant dans la chambre 7, $A_3$ étant la surface de la section transversale du piston hydraulique 95, $F_1$ étant la réaction du ressort de rappel 113; $P_{53}$ étant la pression dans la chambre arrière 53, $P_{51}$ étant la pression dans la chambre avant 51, $A_7$ étant la surface de la section transversale de la chambre 7, $A_{51}$ étant la surface de la section transversale de la chambre avant 51 et également celle de la section de la chambre 53, $A_{29}$ étant la surface de la section transversale de la partie de la tige 23 de plus petit diamètre 29 et $A_{27}$ étant la surface de la section transversale de la partie de plus grand diamètre 27 de la tige 23.

L'assistance du servomoteur hydraulique va augmenter avec la force F et la pression dans la chambre 7 du maître-cylindre selon la formule (I) jusqu'au moment où la pression dans la chambre avant 51 du servomoteur d'assistance est égale à la pression atmosphérique. On entre alors dans la phase de saturation. Dans cette phase de saturation toute variation de la force $\Delta F$ par le conducteur sur la pédale de frein provoque une variation de pression $\Delta P$ dans la chambre 7 du maître-cylindre égale à :

$$\Delta P = \Delta F / A_7$$

Le retour à la position repos du dispositif selon la présente invention se déroule de la manière suivante : le conducteur relâche la pédale de frein, ce qui provoque sous la réaction du ressort 116 le retour en position repos du piston de commande 59 et la fermeture du second clapet 79, et la réouverture de la communication entre la chambre arrière 53 et la chambre avant 51, et par conséquent un rééquilibrage des pressions entre la chambre 53 et la chambre 51 et un retour en position repos du piston d'assistance 15.

Le dispositif selon la présente invention est alors prêt pour une nouvelle phase de freinage.

En cas de dysfonctionnement de la source de liquide de frein à haute pression, le dispositif fonctionne comme un maître-cylindre classique sans assistance. Lorsque le conducteur appuie sur la pédale de frein, l'extrémité arrière du piston de commande 59 vient en appui contre un épaulement formé sur la périphérie interne de l'alésage 51 de la tige 23, déplaçant la tige 23, obturant la communication entre la chambre 7 du maître-cylindre et la chambre d'échappement 119 par interception du joint 129 par l'extrémité longitudinale de la tige 23. L'extrémité longitudinale avant vient en appui contre l'épaulement arrière 101 formé sur la périphérie interne du piston 95 et déplace vers l'avant le piston. L'avancé du piston a pour conséquence d'envoyer du liquide de frein dans les frein, le clapet 77 étant fermé puisqu'il n'est pas soumis à une différence de pression et puisque la communication entre la chambre 7 du maître-cylindre et la chambre d'échappement 119 est fermée.

Nous avons bien réalisé un dispositif de freinage permettant un freinage progressif par écoulement proportionnel à la force de freinage appliquée par le conducteur sur la pédale de frein du fluide hydraulique à haute pression dans la chambre 7 du maître-cylindre et dans le circuit de freinage par l'intermédiaire du canal 9 et offrant une sensation pédale agréable au conducteur.

Il est bien entendu que l'utilisation de tout autre type de clapet que les clapets à billes 77 et 79 ne sort pas du cadre de la présente invention.

La différence de section entre la première partie de plus grand diamètre 27 de la tige 23 disposée à l'arrière de la jupe 25 et de la deuxième partie de plus petit diamètre 29 de la tige 23 disposée à l'avant de la jupe 25 permet avantageusement de maintenir en position repos vers l'arrière le piston d'assistance 15. Ceci évitant avantageusement l'ajout d'un ressort de rappel dans le dispositif de la présente invention.

La présente invention s'applique notamment à l'industrie des véhicules agricoles.

La présente invention s'applique principalement à l'industrie des systèmes de freinage pour véhicules agricoles.

**Revendications**

1. Dispositif de freinage hydraulique comportant un maître-cylindre (13) et un servomoteur d'assistance hydraulique au freinage (11) du type à centre fermé, ledit maître-cylindre (13) comportant au moins un piston hydraulique (95) définissant une chambre de pression (7) reliée à des freins disposés au niveau des roues d'un véhicule, ledit servomoteur hydraulique d'assistance au freinage (11) comportant un piston d'assistance (15) divisant une chambre (5) en une chambre arrière (53) et une chambre avant (51), des moyens de mise en communication et des moyens d'intérruption de la communication (65,67,71) entre les chambres (53,51), ledit dispositif de freinage étant actionné par l'intermédiaire d'une tige d'actionnement (60) reliée à une pédale de frein (62) et déplaçant un piston de commande (59) monté à coulissement étanche dans le piston d'assistance (15), ledit dispositif comportant également une source de fluide hydraulique sous haute pression alimentant ledit servomoteur hydraulique d'assistance au freinage (11), **caracterisé en ce que** au repos la chambre arrière (53) et la chambre avant (51) du servomoteur hydraulique d'assistance au freinage (11) sont mises en communication et remplis de fluide hydraulique de freinage sensiblement à la même pression fourni par la source de fluide hydraulique sous haute pression la communication entre le servomoteur hydraulique d'assistance au freinage (11) et la source de fluide hydraulique à haute pression étant fermé en aval du piston hydraulique d'assistance (15).

2. Dispositif de freinage selon la revendication 1 **caractérisé en ce que** le piston d'assistance (15) comporte une jupe (25) montée fixe sur une tige (23) entraînée par la tige d'actionnement (60).

3. Dispositif de freinage selon la revendication 2 **caracterisé en ce que** une communication entre la chambre (5) du servomoteur hydraulique d'assistance au freinage (11) et la chambre de pression (7) du maître-cylindre s'effectue par l'intermédiaire de canaux (71,73,75) et d'un système de clapets (77,79,93).

4. Dispositif de freinage selon la revendication 3 **caractérisé en ce que** le système de clapets comporte un premier clapet (79) muni d'un obturateur (91) coopérant avec un siège de clapet (87) actionné par un poussoir (93) lors du déplacement du piston de commande (59) dans la tige (23) du piston hydraulique d'assistance (15) et un second clapet (77) muni d'un obturateur (83) coopérant avec un siège (81) actionné par une différence de pression hydraulique entre la chambre (5) du servomoteur hydraulique d'assistance au freinage (11) et la chambre de pression (7) du maître-cylindre.

5. Dispositif de freinage selon l'une quelconque des revendications 2 à 4 **caractérisé en ce que** la tige (23) du piston d'assistance hydraulique comporte une première partie (27) de plus grand diamètre extérieur orientée vers la pédale de frein (62) et une seconde partie (29) de plus petit diamètre extérieur relatif axialement opposée à la première partie (27).

6. Dispositif de freinage selon l'une quelconque des revendications précédentes **caractérisé en ce qu'**il comporte une chambre d'échappement (119) susceptible d'être mise en communication avec la chambre avant (51) du servomoteur hydraulique par des premiers moyens de communication (121) et avec la chambre (7) du maître-cylindre par des seconds moyens de communication (123).

7. Système de freinage **caractérisé en ce qu'**il comporte deux dispositifs de freinage selon l'une des revendications précédentes reliés par un dispositif d'équilibrage de pression.

## Claims

1. Hydraulic braking device comprising a master cylinder (13) and a hydraulic brake booster (11) of the closed-centre type, the said master cylinder (13) comprising at least one hydraulic piston (95) defining the pressure chamber (7) connected to brakes positioned at the wheels of a vehicle, the said hydraulic brake booster (11) comprising a boost piston (15) that divides a chamber (5) into a rear chamber (53) and a front chamber (51), means for establishing communication and means for interrupting communication (65, 67, 71) between the chambers (53, 51), the said braking device being actuated by an actuating rod (60) connected to a brake pedal (62) and moving a control piston (59) mounted to slide in a fluidtight fashion in the boost piston (15), the said device also comprising a high-pressure hydraulic fluid source feeding the said hydraulic brake booster (11), **characterized in that**, at rest, the rear chamber (53) and the front chamber (51) of the hydraulic brake booster (11) are placed in communication and filled with hydraulic brake fluid at substantially the same pressure supplied by the high-pressure hydraulic fluid source, the communication between the hydraulic brake booster (11) and the high-pressure hydraulic fluid source being closed downstream of the hydraulic boost piston (15).

2. Braking device according to Claim 1, **characterized in that** the boost piston (15) comprises a skirt (25) mounted fixedly on a rod (23) driven by the actuating rod (60).

3. Braking device according to Claim 2, **characterized in that** a communication between the chamber (5) of the hydraulic brake booster (11) and the pressure chamber (7) of the master cylinder is established via ducts (71, 73, 75) and a system of valves (77, 79, 93).

4. Braking device according to Claim 3, **characterized in that** the system of valves comprises a first valve (79) fitted with a shutter element (91) that collaborates with a valve seat (87) actuated by a push rod (93) as the control piston (59) moves in the rod (23) of the hydraulic boost piston (15), and a second valve (77) fitted with a shutter element (83) collaborating with a seat (81) actuated by a difference in hydraulic pressure between the chamber (5) of the hydraulic brake booster (11) and the pressure chamber (7) of the master cylinder.

5. Braking device according to any one of Claims 2 to 4, **characterized in that** the rod (23) of the hydraulic boost piston comprises a first part (27) of larger outside diameter directed towards the brake pedal (62) and a second part (29) of smaller relative outside diameter, axially at the opposite end to the first part (27).

6. Braking device according to any one of the preceding claims, **characterized in that** it comprises an exhaust chamber (119) that can be placed in communication with the front chamber (51) of the hydraulic booster by first means of communication (121) and with the chamber (7) of the master cylinder by second means of communication (123).

7. Braking system, **characterized in that** it comprises two braking devices according to one of the preceding claims which are connected by a pressure equalizing device.

**Patentansprüche**

1. Hydraulische Bremsvorrichtung, die einen Hauptbremszylinder (13) und einen hydraulischen Servomotor zur Bremskraftverstärkung (11) von der Art Closed Centre aufweist, wobei der Hauptbremszylinder (13) mindestens einen Hydraulikkolben (95) aufweist, der eine Druckkammer (7) definiert, die mit Bremsen verbunden ist, welche im Bereich der Räder eines Fahrzeugs angeordnet sind, wobei der hydraulische Servomotor zur Bremskraftverstärkung (11) einen Hilfskolben (15), der eine Kammer (5) in eine hintere Kammer (53) und eine vordere Kammer (51) aufteilt, Einrichtungen zur Verbindung und Einrichtungen zur Unterbrechung der Verbindung (65, 67, 71) zwischen den Kammern (53, 51) aufweist, wobei die Bremsvorrichtung mittels einer Betätigungsstange (60) betätigt wird, die mit einem Bremspedal (62) verbunden ist und einen Steuerkolben (59) verschiebt, der dicht gleitend im Hilfskolben (15) montiert ist, wobei die Vorrichtung ebenfalls eine Hochdruck-Hydraulikfluidquelle aufweist, die den hydraulischen Servomotor zur Bremskraftverstärkung (11) speist, **dadurch gekennzeichnet, dass** in der Ruhestellung die hintere Kammer (53) und die vordere Kammer (51) des hydraulischen Servomotors zur Bremskraftverstärkung (11) miteinander verbunden und mit hydraulischem Bremsfluid auf im Wesentlichen dem gleichen Druck gefüllt sind, das von der Hochdruck-Hydraulikfluidquelle geliefert wird, wobei die Verbindung zwischen dem hydraulischen Servomotor zur Bremskraftverstärkung (11) und der Hochdruck-Hydraulikfluidquelle hinter dem hydraulischen Hilfskolben (15) geschlossen ist.

2. Bremsvorrichtung nach Anspruch 1, **dadurch gekennzeichnet, dass** der Hilfskolben (15) eine Schürze (25) aufweist, die fest auf eine Stange (23) montiert ist, die von der Betätigungsstange (60) angetrieben wird.

3. Bremsvorrichtung nach Anspruch 2, **dadurch gekennzeichnet, dass** eine Verbindung zwischen der Kammer (5) des hydraulischen Servomotors zur Bremskraftverstärkung (11) und der Druckkammer (7) des Hauptbremszylinders über Kanäle (71, 73, 75) und ein Ventilsystem (77, 79, 93) erfolgt.

4. Bremsvorrichtung nach Anspruch 3, **dadurch gekennzeichnet, dass** das Ventilsystem ein erstes Ventil (79), das mit einem Verschluss (91) versehen ist, der mit einem Ventilsitz (87) zusammenwirkt, der von einem Drücker (93) bei der Verschiebung des Steuerkolbens (59) in der Stange (23) des hydraulischen Hilfskolbens (15) betätigt wird, und ein zweites Ventil (77) aufweist, das mit einem Verschluss (83) versehen ist, der mit einem Sitz (81) zusammenwirkt, der durch einen hydraulischen Druckunterschied zwischen der Kammer (5) des hydraulischen Servomotors zur Bremskraftverstärkung (11) und der Druckkammer (7) des Hauptbremszylinders betätigt wird.

5. Bremsvorrichtung nach einem der Ansprüche 2 bis 4, **dadurch gekennzeichnet, dass** die Stange (23) des hydraulischen Hilfskolbens einen ersten Bereich (27) größeren Außendurchmessers, der zum Bremspedal (62) hin gerichtet ist, und einen zweiten Bereich (29) relativ kleineren Außendurchmessers aufweist, der axial dem ersten Bereich (27) gegenüberliegt.

6. Bremsvorrichtung nach einem der vorhergehenden Ansprüche, **dadurch gekennzeichnet, dass** sie eine Auslasskammer (119) aufweist, die mit der vorderen Kammer (51) des hydraulischen Servomotors zur Bremskraftverstärkung durch erste Verbindungseinrichtungen (121) und mit der Kammer (7) des Hauptbremszylinders durch zweite Verbindungseinrichtungen (123) verbunden werden kann.

7. Bremssystem, **dadurch gekennzeichnet, dass** es zwei Bremsvorrichtungen nach einem der vorhergehenden Ansprüche aufweist, die durch eine Druckausgleichsvorrichtung verbunden sind.

FIG. 1

FIG. 2

EP 1 457 400 B1

FIG. 3

EP 1 457 400 B1

**EP 1 457 400 B1**

**RÉFÉRENCES CITÉES DANS LA DESCRIPTION**

**Documents brevets cités dans la description**

- US 4741161 A